# EUROPEAN PATENT SPECIFICATION

(11) **EP 0 631 728 B1**
(45) Date of publication and mention of the grant of the patent: **04.11.1998**
(21) Application number: 94109822.0
(22) Date of filing: 24.06.1994
(51) Int. Cl.: A23K 1/14, A23K 1/18

(54) **Procedure for comminuting cereal grains to be admixed to the feed of a single-stomach production animal**
Verfahren zur Zerkleinerung von Getreidekörnern für die Zumischung zu Futter für monogastrische Nutztiere
Procédé pour pulvériser des grains céréaliers à ajouter au fourrage d'animaux utiles monogastriques

(30) Priority: 30.06.1993 FI 933014
(43) Date of publication of application: 04.01.1995
(73) Proprietor: SUOMEN REHU OY, 00240 Helsinki (FI)
(72) Inventor: Vuorenmaa, Juhani, SF-01820 Klaukkla (FI); Hakulin, Stina, SF-02600 Espoo (FI)
(74) Representative: Papula, Antti

(56) References cited:
- WO-A-88/06410
- WO-A-91/07881
- US-A- 4 080 475

## Description

The present invention concerns a procedure for comminuting grains of cereal to be admixed to the feed of single-stomach production animals, in particular pigs.

Cereal is raw material commonly used in pig feed. Grinding the grains of cereal to be admixed to the feed has been found, according to general understanding, to improve the utilization of cereal with pigs of all ages. Studies relating to the effect of grinding coarseness of cereal have revealed that better growth results, generally considered, are achieved with fine-ground feed. It has further been found that the more finely divided the meal the larger is the total surface area of the meal exposed to digestion enzymes, and the better its digestibility.

Present practice is generally to use in pig feeds cereal processed in a hammer mill to fine-ground state, in view of its good digestibility and good granulability. Good growth results are obtained with such feed, and it is therefore used in power-feeding pigs.

The problem is, however, that such feed used in power feeding produces damage of various degrees in the pigs' digestive tracts. Such damage includes gastric ulcer, which has been found to be of two different types: ulcer of the glandular part and of the nonglandular part, and milder changes in the intestinal wall, which may further progress to intestinal inflammation. According to various studies serious changes detrimental to the pig's comfort and well-being occur in 10 to 20% of pigs. According to a Finnish investigation, 20% of the mortality of meat pigs are due to gastric ulcer.

Commonly, the most important cause responsible for development of digestive tract damage is considered to be the physical and chemical composition of the feed. Other causes are various stress factors, such as small pens, competition situation, humidity, poor ventilation, long transport distances and/or prolonged period in the slaughterhouse. Attempts have been made to eliminate the problem by adding feed raw material rich in fibre. But the problem could not be solved by this approach. The utilizability of feed produced in this way has been low and the effect on productivity has likewise been low.

The digestive tract-damaging effect of feed such as is used at present has been estimated to be due, in particular, to the finely divided cereal meal contained in the feed.

Various studies have shown the connection between cereal grain particle size and gastric ulcer. There is one study which reports increased fluidity of the stomach contents caused by finely ground cereal, whereby the stomach contents become more powerfully mixed. As a consequence, the stomach contents containing HCl and pepsin cone into contact with the nearly unprotected stomach wall, causing damage there.

Coarse grinding of cereal is known to reduce the incidence of gastric ulcer cases clearly, but on the other hand the digestibility of coarse-ground cereal is not good enough with a view to power feeding. Cereal meal which has been left coarser in hammer mill grinding, which has a reduced total surface area of its particles, is inferior in digestibility to cereal which has been fine-ground. Further, coarser cereal used for chickens and steam-rolled cereal used for neat livestock have been tried out on pigs, but these too have yielded inferior digestibility, compared with presently used pig feed rich in cereal ground to fine division in the hammer mill.

Therefore the cereal going to be admixed to pig feed has even further been ground to a degree of comminution involving damage to the digestive system, for the reason that in spite of stomach damage the best growth results are achieved with it.

It is however questionable to use pig feed which may cause pathological, painful damage to the pigs even though this damage might not have any influence on the growth results of the animals.

The object of the present invention is elimination of the drawbacks held forth in the foregoing.

The object of the invention is, specifically, to disclose a procedure which enables cereal meal to be admixed to pig feed and/or granulated together therewith by means of which the effects damaging the digestive tract can be reduced compared with the cereal meal heretofore used in power feeding, and by means of which in addition an optimal growth result can be achieved.

The object of the invention is furthermore to disclose cereal meal comminuted by a procedure according to the invention which can be admixed to pig feed meant for power feeding, and pig feed thus obtained.

The object of the invention is moreover to disclose a procedure by which the effects damaging the digestive tract of pig feeds used in power feeding can be significantly reduced without thereby impairing the digestibility of the feed.

Regarding the features characterizing the invention reference is made to the claims.

It has been found in studies made in connection with the invention that when in pig feed cereal meal is used which has been comminuted or ground as taught by the invention in a dry roll grinder, it becomes possible to reduce efficiently the digestive tract damage occurring in pigs, which is encountered when using fine-ground cereal meal. Furthermore, the digestibility of the coarsely divided cereal meal of the invention has been found to be at least equal to that of the more finely divided cereal meal heretofore used in power feeding.

It was found in studies that were carried out that the structure of cereal can by dry roll grinding be changed without reducing the pore volume of the particles. In actual fact, coarsely divided cereal particles can be produced by the procedure of the invention which have a pore volume which is consistent with the pore volume of the particles of cereal ground fine in a hammer mill, such as is used in pig feed at present.

The unexpectedly large pore volume of the particles of cereal ground as taught by the invention has been found to be due to the fact that the grains are flattened in the dry roll grinder and their surface structure cracks and/or becomes pleated, adding amply to the pore volume of the particles. In the cereal particles pores are formed owing to said cracking and/or pleating, which increase the surface area of the particles and the volume of the gaps or pores that are formed.

In the literature the effects of cereals ground by different grinding methods have only been studied as regards digestibility of the feed and the pigs' growth. Fairly few studies have been reported, and the results reported are somewhat controversial, perhaps owing to different conditions of experiment. For instance, in the experiments reported in the references: Lawrence, T.L.J., Some effects of including differently processed barley in the diet of the growing pig, Growth rate, food conversion efficiency, digestibility and rate of passage through the gut, Anim. Prod. (1970) 12:139-150, and Haugse et al. , Effect of physical form of barley in rations for fattening pigs. N. Dakota Agric. Exp. Stat. Res. Rep. No. 17 (1966), similar, or slightly better, results were obtained with cold rolling than with hammer mill grinding. The authors concluded on the strength of the results, in a general way, that in addition to the coarseness grade of the meal there are other factors affecting the production results, such as the surface configuration of the feed particles. In the publication: Frabe et al., Effect of processing barley and of delayed concentrate feeding on growth and nutrient balance in growing pigs and the effect of processing barley on apparent digestibility of pregnant sows. J. Anim. Sci. 27: 1313-1319 (1968), on the other hand, experimental results are reported according to which there was only a minor difference in digestibility between altogether unground and cold-rolled barley. According to the results reported in: Madsen et al., Høsttids- og lagringsforsøg med byg. Landøkonomisk Forsøgslaboratoriums efterårsmøde, Årbog, 64-74 (1970), cold-rolled barley administered in dry state had lower feed utilizing efficiency than barley ground in a hammer mill. No differences were noted in broth feeding. In: Näsi, M., Effects of grinding, pelleting and expanding on nutritive value of barley in pig diets, Agric. Sci. Finl. 1: 461-469 (1992) the effects of hammer mill grinding, granulating and expander treatment on the nutrient digestibility of barley fed to pigs and on albumin utilization were compared. It may be mentioned regarding hammer mill grinding and rolling, that pigs which had been given rolled barley retained more nitrogen, according to the study, and albumin utilization was more efficient than in those which had been given hammer mill-ground barley. Furthermore, in: CAB Abstracts 0861579, ONO59-03252, Journal of Agricultural Association of China 1988, 144:76-84, and in: CAB Abstracts 0807082, ONO59-02386, Journal of the Agricultural Association of China 1987, 138:87-95, the influence of particle size of corn or durra comminuted in a dry roll grinder on the digestibility of pig feed containing the respective cereal and on the growth of the animals has been considered.

With the aid of the present invention an entirely different problem has been solved, associated with digestibility of feed containing cereal meal and used in connection with power feeding of pigs, and on the digestive tract damage caused by such feed in pigs. The problem has been solved in that now, for the first time ever, a comparison has been made of hammer mill grinding and dry roll grinding in the case of pig feed such as is nowadays used in power feeding, and the effect exerted by the particle structure of dry-rolled cereal on indigestibility of the cereal and on occurrence of digestive tract damage has been investigated.

As taught by the invention, the grains of cereal to be admixed to pig feed, such as wheat and/or barley, are comminuted or ground with a dry roll grinder so that coarse particles are obtained of which more than 50% have particle size 1-5 mm, advantageously 1-4 mm, and cumulative pore volume of the particles in the range from 0.01 to 10 µm is 0.08-0.2 cm³/g, advantageously 0.09-0.15 cm³/g. Of the particles that are formed, e.g. more than 50% have particle size 1-4 mm, advantageously more than 60%, 1-3 mm. The mean particle size DPm of the comminuted cereal is suitably 1-4 mm, advantageously 1.5-2.5 mm.

Grinding is advantageously accomplished at cereal moisture content less than about 15% and in the form of so-called cold rolling, that is, at a temperature below about 20°C or below about 25°C.

For roll grinder any dry roll grinder may be used which produces particles having the properties mentioned above. The roll grinder is commonly known in feed producing technology and will not be described in any greater detail in this context.

As taught by the invention, the comminuted cereal is then possibly admixed and/or combined by granulation with other pig feed raw materials commonly used in order to produce pig feed for use in power feeding and, if required, processed further in a manner known in the art.

Cereal meal comminuted according to the invention can be used in feeds for any single-stomach production animal, e.g. pig, chicken etc. in replacement of presently used cereal fine-ground in a hammer mill, in order to reduce the digestive tract-damaging effect of the feed without impairing the digestibility of the feed.

The procedure of the invention is suited in particular for comminution of low-fat cereal, such as wheat, barley, corn etc., or in general any other low-fat cereal-like product, such as peas, etc.

The invention is described in the following with the aid of embodiment examples, referring to the attached drawings, wherein:-
Fig. 1 presents the cumulative pore volume in the range of 0.01 to 10 µm of hammer mill-ground conventional barley meal (FII = interfacial contact angle, Ø = edge contact angle; DS = derivate scale factor),
Figs 2a-b present the cumulative pore volume in the range of 0.01 to 10 µm of the particles of barley granules ground according to the invention (FII = interfacial contact angle, Ø = edge contact angle; DS = derivate scale factor), and
Fig. 3 presents the cumulative pore volume in the range of 0.01 to 10 µm of rifle-ground barley (FII = interfacial contact angle, Ø = edge contact angle; DS = derivate scale factor).

The examples are only meant to illustrate the invention, without confining it in any way whatsoever.

### Example 1: Particle distribution of barley for admixture to pig feed

A roll grinder was employed in the grinding process. Roll diameter was 600 mm and length, 1250 mm.

Barley, with moisture content about 15%, and cold (e.g. with temperature equivalent to outdoor temperature), was comminuted in said roll grinder. Rolling capacity was 12 to 18 tons/hr.

Coarse barley meal was obtained, for which the following particle distribution was found using a wire screen with square apertures:

| Particle size (wire screen) | Proportion |
|---|---|
| Over 4 mm | 0 to 15% by weight |
| 1.6 to 4 mm | 55 to 70% by weight |
| 1 to 1.6 mm | 15 to 25% by weight |
| 0.315 to 1 mm | 5 to 15% by weight |
| less than 0.315 mm | 1 to 5% by weight |

Thus, more than 85% by weight of the product had particle size over 1 mm, more than 75% by weight had particle size over 1.6 mm.

### Example 2: Particle size of ground barley and pore volume

In this measurement, barley was ground as in Example 1, in equivalent conditions (fractions I and II). Coarse barley meal was obtained, for which the following particle distribution was measured, using a wire screen:

| Particle size (wire screen) | I | II |
|---|---|---|
| Less than 0.28 mm | 3.0% | 3.7% |
| 0.28 to 0.5 mm | 2.7% | 2.3% |
| 0.5 to 1.0 mm | 13.6% | 11.2% |
| 1.0 to 1.4 mm | 18.5% | 16.5% |
| 1.4 to 2.0 mm | 26.4% | 24.6% |
| 2.0 to 2.8 mm | 21.8% | 25.0% |
| Over 2.8 mm | 14.0% | 16.7% |

Mean particle size (DPm) was found by measurement to be 1.5 to 2.5 mm, more than 60% of particles were within 1 to 3 mm.

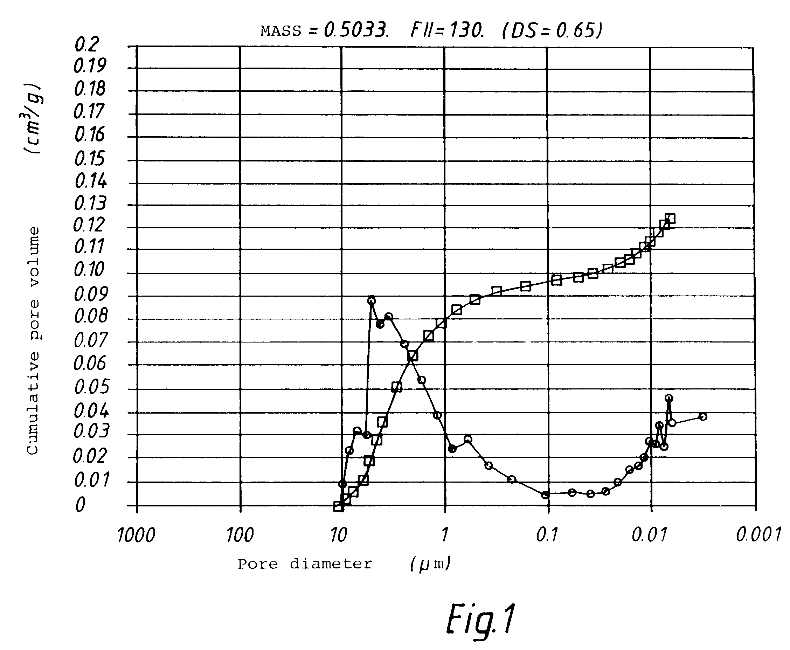

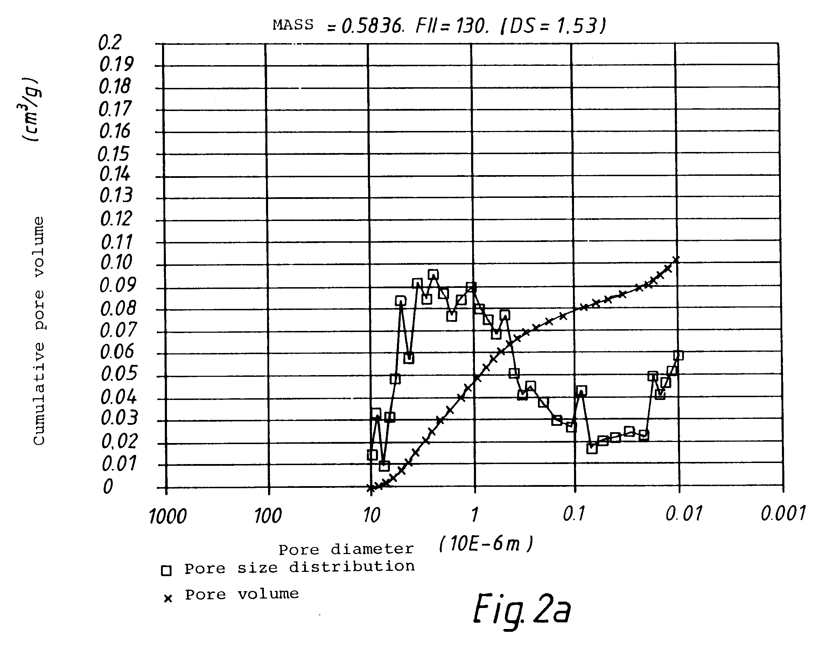

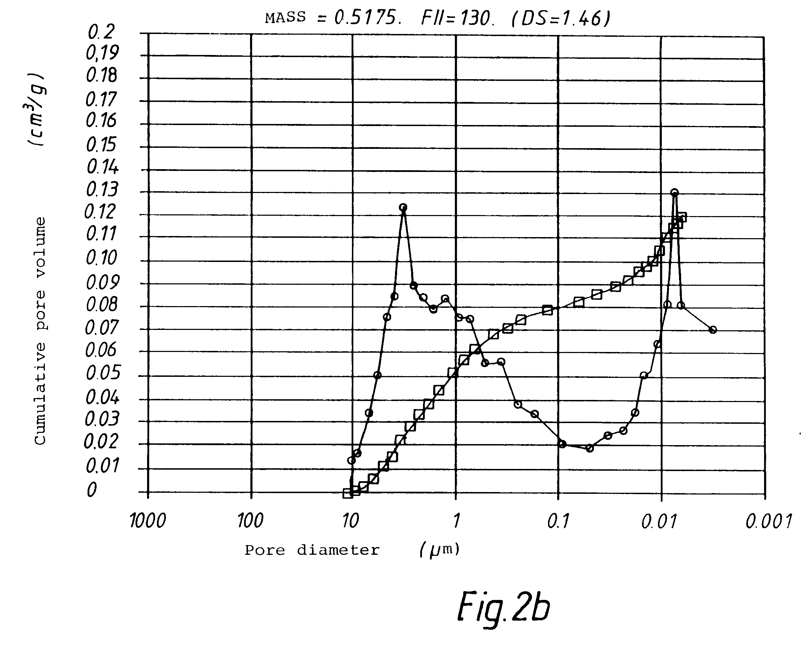

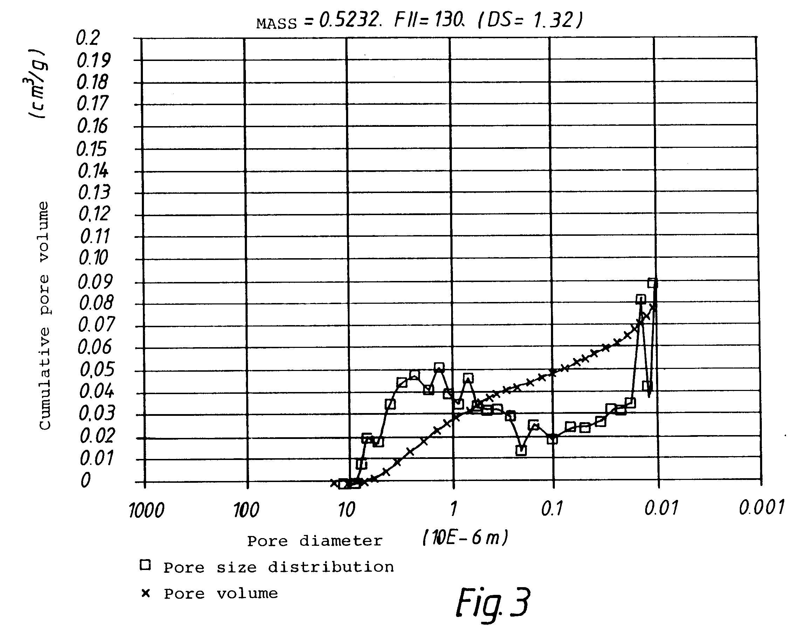

For the ground particles the cumulative pore volume was measured in the interval from 0.01 to 10 µm (measured by mercury porosimeter); it was 0.10 to 0.11 cm³/g; Fig. 1, and likewise that of rifle-ground barley, DPm 2.1 mm, cumulative pore volume 0.075 cm³/g. The results of measurement were graphically plotted in detail; Fig. 1: hammer mill-ground barley, DPM 0.65 mm; Figs 2a-b: barley ground according to invention DPm 1.7 to 2.0 mm, fractions I and II; and Fig. 3: rifle-ground barley DPm about 2.1 mm. In the figures the cumulative pore volume (in cm³/g) is plotted over pore volume for the interval from 0.01 to 10 µm.

### Example 3: Production test

In the test, cereal meal according to Examples 1 and 2 was used in the form of cereal meal conforming to the invention (R or ROLL). For reference meal, hammer mill-ground cereal meal (HM) representing the state of art was used.

Table 1 shows the results that were obtained. The table reveals that incremental growth and feed utilization of the pigs in the case of pigs given dry-rolled feed according to the invention equalled or surpassed those of the pigs given hammer mill-ground meal.

The stomachs were examined and graded according to a classification which was developed. In the tests only 1 to 7% of the stomachs of pigs fed hammer mill-ground cereal were classified as normal, while 11 to 18% of the pigs displayed severe changes. In the group of pigs given cereal according to the invention, 40 to 67% of the stomachs were normal, and there were no severe changes at all.

**TABLE 1**

| A. PRODUCTION TESTS | | | | | | |
|---|---|---|---|---|---|---|
| | TEST 1 | | TEST 2 | | TEST 3 | |
| | HM | ROLL | HM | R | HM | ROLL |
| Number of pigs | 64 | 32 | 32 | 32 | 80 | 80 |
| Incremental growth, g per day | 816 | 864 | 898 | 921 | 891 | 901 |
| Feed, kg per kg | 2.88 | 2.72 | 2.64 | 2.59 | 2.65 | 2.63 |
| Growing days | 96 | 93 | 90 | 90 | 86 | 85 |
| Normal stomach, in % of the pigs | 4.8 | 61.3 | 7.1 | 66.7 | 1.3 | 40.0 |
| Severe changes, in % of the pigs | 17.6 | 0 | 10.8 | 0 | 16.3 | 0 |

## Claims

1. A procedure for comminuting grains of cereal to be admixed to the feed of a single-stomach production animal. in particular a pig, characterized in that the cereal grains are ground in a dry roll grinder into coarse-divided particles so that more than 50% of the comminuted cereal has particle size 1 to 5 mm and the cumulated pore volume of the particles in the range from 0.01 to 10 µm is 0.08 to 0.2 cm³/g, advantageously 0.09 to 0.15 cm³/g, so that with the cereal meal is achieved reduced effect damaging the digestive tract without incurring its impaired digestibility.

2. Procedure according to claim 1, characterized in that the cereal grains are comminuted so that more than 50% by weight of the comminuted cereal has particle size 1 to 4 mm, advantageously over 60% has particle size 1 to 3 mm.

3. Procedure according to claim 1 or 2, characterized in that the cereal grains are comminuted so that mean particle size DPm of the comminuted cereal will be 1 to 4, advantageously 1.5 to 2.5 mm.

4. Procedure according to any one of claims 1-3, characterized in that for cereal to be comminuted is used wheat, barley and/or corn.

5. Procedure according to any one of claims 1-4, characterized in that comminution is carried out as a cold rolling process.

6. Procedure according to any one of claims 1-5, characterized in that comminution is carried out at moisture content of the cereal less than about 15%.

7. Pig feed containing comminuted cereal, characterized in that the cereal has been comminuted in a dry roll grinder in order to obtain coarse particles of which more than 50% by weight have particle size 1 to 5 mm, advantageously 1 to 4 mm, most advantageously more than 60& have particle size 1 to 3 mm, and cumulative pore volume of particles in the range from 0.01 to 10 µm is 0.08 to 0.2 cm³/g, advantageously 0.09 to 0.15 cm³/g, so that the pig feed has reduced effect damaging the digestive tract, without impairment of its digestibility.

8. Pig feed according to claim 7, characterized in that the cereal product is wheat, barley and/or corn.

9. A process for the manufacture of pig feed for reducing the effect damaging the digestive tract of pig feed containing ground cereal without impairing the digestibility of the feed, characterized in that in the pig feed is used cereal comminuted in a dry roll grinder for obtaining particles of which more than 50% by weight have particle size 1 to 4 mm, preferably more than 60% by weight have particle size 1 to 3 mm, and the cumulative pore volume of particles in the range from 0.01 to 10 µm is 0.08 to 0.2 cm³/g, advantageously 0.09 to 0.15 cm³/g.

10. Procedure according to claim 9, characterized in that in the pig feed is used wheat, barley and/or corn.

## Patentansprüche

1. Verfahren zum Zerkleinern von Getreidekörnern, die dem Futter für ein monogastrisches Nutztier, insbesondere ein Schwein, zugesetzt werden, **dadurch gekennzeichnet,** daß die Getreidekörner in einer Trockenwalzenmühle so zu grob zerkleinerten Teilchen gemahlen werden, daß mehr als 50% des zerkleinerten Getreides eine Teilchengröße von 1 bis 5 mm haben, und das kumulierte Porenvolumen der Teilchen im Bereich von 0,01 bis 10 µm 0,08 bis 0,2 cm³/g, vorteilhafterweise 0,09 bis 0,15 cm³/g, beträgt, so daß mit dem Getreidefutter der Verdauungstrakt weniger geschädigt wird, ohne daß seine schlechtere Verdaubarkeit damit einhergeht.

2. Verfahren nach Anspruch 1, **dadurch gekennzeichnet,** daß die Getreidekörner so zerkleinert werden, daß mehr als 50 Gew.-% des zerkleinerten Getreides eine Teilchengröße von 1 bis 4 mm, vorzugsweise über 60% eine Teilchengröße von 1 bis 3 mm haben.

3. Verfahren nach Anspruch 1 oder 2, **dadurch gekennzeichnet,** daß die Getreidekörner so zerkleinert werden, daß die mittlere Teilchengröße DPm des zerkleinerten Getreides 1 bis 4, vorteilhafterweise 1,5 bis 2,5 mm, beträgt.

4. Verfahren nach einem der Ansprüche 1 - 3, **dadurch gekennzeichnet,** daß als das zu zerkleinernde Getreide Weizen, Gerste und/oder Mais verwendet wird.

5. Verfahren nach einem der Ansprüche 1 - 4, **dadurch gekennzeichnet,** daß die Zerkleinerung als Kaltwalzverfahren ausgeführt wird.

6. Verfahren nach einem der Ansprüche 1 - 5, **dadurch gekennzeichnet,** daß die Zerkleinerung bei einem Feuchtigkeitsgehalt des Getreides von weniger als ungefähr 15% ausgeführt wird.

7. Schweinefutter, das zerkleinertes Getreide enthalt, **dadurch gekennzeichnet,** daß das Getreide in einer Trockenwalzenmühle zerkleinert wurde, um grobe Teilchen herzustellen, von denen mehr als 50 Gew.-% eine Teilchengröße von 1 bis 5 mm, vorteilhafterweise 1 bis 4 mm, und bevorzugterweise mehr als 60% eine Teilchengröße von 1 bis 3 mm haben, und das kumulative Porenvolumen von Teilchen im Bereich von 0,01 bis 10 µm 0,08 bis 0,2 cm³/g, vorteilhafterweise 0,09 bis 0,15 cm³/g, beträgt, so daß das Schweinefutter den Verdauungstrakt weniger schädigt, ohne daß seine Verdaubarkeit beeinträchtigt wird.

8. Schweinefutter nach Anspruch 7, **dadurch gekennzeichnet,** daß es sich bei dem Getreideerzeugnis um Weizen, Gerste und/oder Mais handelt.

9. Verfahren zum Herstellen von Schweinefutter, durch das die Schädigung des Verdauungstraktes von Schweinefutter, das gemahlenes Getreide enthält, verringert wird, ohne die Verdaubarkeit des Futters zu beeinträchtigen, **dadurch gekennzeichnet,** daß für das Schweinefutter Getreide eingesetzt wird, das in einer Trockenwalzenmühle zerkleinert wird, um Teilchen herzustellen, von denen mehr als 50 Gew.-% eine Teilchengröße von 1 bis 4 mm, vorzugsweise mehr als 60 Gew.-% eine Teilchengröße von 1 bis 3 mm haben, und das kumulative Porenvolumen von Teilchen in dem Bereich von 0,01 bis 10 mm 0,08 bis 0,2 cm³/g, vorteilhafterweise 0,09 bis 0,15 cm³/g, beträgt.

10. Verfahren nach Anspruch 9, **dadurch gekennzeichnet,** daß für das Schweinefutter Weizen, Gerste und/Mais verwendet werden.

## Revendications

1. Procédé pour broyer des grains de céréales devant être mélangés à l'alimentation d'un animal de production dont l'estomac possède un seul réservoir, en particulier un porc, caractérisé en ce que les grains de céréales sont broyés dans un broyeur à cylindres secs en particules grossièrement divisées, de façon que plus de 50 % des céréales broyées aient une granulométrie de 1 à 5 mm, et que le volume cumulé des pores des particules ayant une granulométrie comprise entre 0,01 et 10 µm soit compris entre 0,08 et 0,2 cm³/g, avantageusement entre 0,09 et 0,15 cm³/g, de sorte que l'on arrive, avec la farine de céréales, à une réduction de la dégradation du tube digestif, sans détériorer sa digestibilité.

2. Procédé selon la revendication 1, caractérisé en ce que les grains de céréales sont broyés de façon que plus de 50 % en poids des céréales broyées aient une granulométrie de 1 à 4 mm, et qu'avantageusement plus de 60 % aient une granulométrie de 1 à 3 mm.

3. Procédé selon la revendication 1 ou 2, caractérisé en ce que les grains de céréales sont broyés de façon que la granulométrie moyenne DPm des céréales broyées soit de 1 à 4, et avantageusement de 1,5 à 2,5 mm.

4. Procédé selon l'une quelconque des revendications 1 à 3, caractérisé en ce que, pour la céréale à broyer, on utilise du blé, de l'orge et/ou du maïs.

5. Procédé selon l'une quelconque des revendications 1 à 4, caractérisé en ce que le broyage est mis en oeuvre sous forme d'un procédé de laminage à froid.

6. Procédé selon l'une quelconque des revendications 1 à 5, caractérisé en ce que le broyage est effectué en présence d'un taux d'humidité des céréales inférieur à environ 15 %.

7. Aliment pour porcs contenant des céréales broyées, caractérisé en ce que les céréales ont été broyées dans un broyeur à cylindres secs dans le but d'obtenir des particules grossières dont plus de 50 % en poids ont une granulométrie de 1 à 5 mm, et avantageusement de 1 à 4 mm, et tout spécialement plus de 60 % ont une granulométrie de 1 à 3 mm, le volume cumulé des pores des particules ayant une granulométrie comprise entre 0,01 et 10 µm étant de 0,08 à 0,2 cm³/g et avantageusement de 0,09 à 0,15 cm³/g, de façon que l'aliment pour porcs présente un effet réduit de détérioration du tube digestif sans dégrader sa digestibilité.

8. Aliment pour porcs selon la revendication 7, caractérisé en ce que le produit céréalier est le blé, l'orge et/ou le maïs.

9. Procédé pour fabriquer un aliment pour porcs, pour réduire l'effet de dégradation du tube digestif que présente un aliment pour porcs contenant des céréales broyées, sans détériorer la digestibilité de l'aliment, caractérisé en ce qu'on utilise dans l'aliment pour porcs des céréales broyées dans un broyeur à cylindres secs dans le but d'obtenir des particules dont plus de 50 % en poids ont une granulométrie de 1 à 4 mm, de préférence plus de 60 % en poids ont une granulométrie de 1 à 3 mm, et le volume cumulé des pores des particules ayant une granulométrie comprise entre 0,01 et 10 µm étant de 0,08 à 0,2 cm³/g, avantageusement de 0,09 à 0,15 cm³/g.

10. Procédé selon la revendication 9, caractérisé en ce qu'on utilise dans l'aliment pour porcs du blé, de l'orge et/ou du maïs.
